# EUROPEAN PATENT SPECIFICATION

(11) **EP 1 198 653 B1**
(45) Date of publication and mention of the grant of the patent: **28.09.2005**
(21) Application number: 00947720.9
(22) Date of filing: 18.07.2000
(51) Int. Cl.: E06B 9/266, B23D 47/04

(54) **ROTARY SAW CUTTER BLIND CUT DOWN MACHINE**
ZURÜCKSCHNEIDEN VON JALOUSIEN MITTELS EINER KREISSÄGE
MACHINE D'EBOUTAGE DE STORES A LAME DE SCIE ROTATIVE

(30) Priority: 23.07.1999 US 360316; 20.06.2000 US 596956
(43) Date of publication of application: 24.04.2002
(73) Proprietor: Shade-O-Matic Limited, Toronto, M3N 1W6 (US)
(72) Inventor: MAROCCO, Norbert, Woodbridge, Ontario L4L 3M6 (CA)
(74) Representative: Britter, Keith Palmer
(86) International application number: PCT/CA2000/000844
(87) International publication number: WO 2001/007747

(56) References cited:
- US-A- 2 925 005
- US-A- 3 877 690
- US-A- 5 816 126

## Description

### FIELD OF THE INVENTION

The invention relates to a machine for trimming the ends of blinds and window coverings, in which the slats are formed of materials requiring a saw cut.

### BACKGROUND OF THE INVENTION

Blinds and window coverings are available in a variety of materials. Horizontal blinds are available in which the head rail, and in some cases, the bottom rails are formed of metal, usually steel, and in which the slats are formed of wood. In other cases slats may be formed of materials such as thick thermo plastic or other heavier materials.

In some cases blinds may be available in which the slats are vertical being secured usually at the top to a head rail typically made of steel. Bottom rails are not usually required on this type of blind, since the slats are relatively heavy.

Such blinds must be fitted to the width, or in some cases the height and width, of the window or other opening for which they are intended. In the past blinds have been made in a factory, on a custom basis to a particular width (and height) specified by the purchaser. A salesperson would usually have had to call on the customer and take an order. However, it is more convenient to manufacture blinds and window coverings in certain standard widths, and stock these standard widths in a retail store. A customer may then simply come into the store and buy a blind slightly wider than the desired width (or longer than the height), and have it trimmed at the ends to the desired width (or height). This is both more economical, and thus more readily saleable, and at the same time provides the customer with an opportunity to purchase blinds in a retail establishment and walk out of the store with them in his possession, rather than meeting a salesperson at home, and waiting a few weeks for them to be fabricated in a factory.

A machine for cutting blinds is shown for example in PLUBER US Patent 5.816.126.

For example HENSLEY US Patent 2,925,005 discloses a machine for clamping bundles of wooden pieces, and holding them for cutting.

It does not relate to trimming blinds as such. The method of clamping of the bundles of wooden pieces disclosed essentially forms the pieces into a square bundle. This, is totally unsuited to clamping blind slats, which must be held side by side. This is due to the fact that blinds are trimmed after they have already been assembled with their blind tapes and controls. The slats must be clamped without disturbing the tapes or controls.

Hsu US Patent 4,907,325 discloses a machine used to trim both ends of a blind simultaneously. The entire blind is clamped by cylinders on a bench. Two saws then move simultaneously to trim opposite ends of all the blind components, ie the head rail the blind slats and the bottom rail.

Two milling heads then mill the trimmed ends of the components to give them a slightly curved profile at each end.

This will result in the head rail having milled and curved ends, as well as the slats and bottom rail. Generally this would be undesirable to a consumer. Most consumers expect the blind head rail to be cut square at the ends. The effect of milling the head rail ends would be to define milled curves running from top to bottom of the head rail and would create an odd appearance.

This system does not have dies for trimming the head rail of the blind., separately from the blind slats.

In the past various apparatus has been designed for cutting down widths of horizontal blinds of specific designs and specific materials. However, in general terms, these machines have not been totally suitable for cutting down blinds in which the slats are made of heavier (or thicker) materials, such as wood or thick thermoplastic.

In addition to these factors, blinds and window coverings are also available in which blind slats are suspended vertically from a head rail. These blind slats may be drawn to one side or the other of the window opening, or in some cases to both sides, and may be rotated between open and closed positions, by a mechanism located in the head rail. Again, these blinds usually required a sales call, at the home, followed by custom fabrication in a factory.

Advantageously, these blinds too would be provided in standard widths, in a retail store and it would be desirable to provide an apparatus in the store for cutting down the width of the head rail, and also the lengths of the vertical slats, in the case of vertical blinds. Vertical blinds, as well as horizontal blinds, also use blind slats which are made of heavier or thicker materials such as wood or thick thermoplastic, and earlier machines such as those using shears or cutting blades are not suitable for cutting blind slats either vertical or horizontal, made of these thicker materials.

Preferably, in order to economize in-store installations of cut-down equipment and also to simplify instruction of staff, a single cut-down machine will be provided which enables blinds having a metal head rail, and having slats formed of these heavier materials to be cut down to the desired width (or height) in a single machine.

One of the considerations in designing such a cut-down machine is the manual effort that is required to operate the machine to cut through the head rail materials and the different cutting action, namely a saw cut for the heavier (and thicker) slat materials.

Clearly, metal such as steel, used in head rails, is relatively hard to cut. On the other hand, since the sections used in this type of product are relatively thin, the die for cutting the metal components of the blind may only be required to move a short distance.

Consequently, so long as adequate leverage is provided to move the metal cutting die a relatively short distance, this problem can be addressed.

On the other hand, the cutting of the blind slats themselves presents entirely different problems. In this type of blind the slats are made of relatively thick materials which while easier to cut require a saw blade action. The thickness of all of the blind slats of these heavier materials when bundled together for cutting is considerable. Consequently, the saw for cutting these heavier, thicker blind slats must move a considerable distance.

While it is relatively easy to provide for the manual operation of such a saw moving a considerable distance for cutting easier to cut thicker materials, the problem becomes more complex when it is understood that it is desirable, at least in the case of horizontal blinds, to cut all of the materials, both the metal head rail and the softer blind slats, in what is essentially a single cutting stroke.

This is because, at least in the case of horizontal blinds, the trimming of the ends of the head rails and slats must in most cases be carried out, so that the blind has a precisely measured width along each side, and the widths of the blind slats correspond to the widths of the head rail and bottom rail. This is not so important in the case of vertical blinds, but is still desirable.

It is not feasible to provide two machines, i.e. a first machine which cuts only the head rail which is usually made of steel, and a second machine for an entirely separate cut for cutting the softer, thicker blind slats.

The moving of the blind from one machine to another will almost inevitably result in some discrepancy between the amount cut off from the head rail and the amount cut off from the blind slats, and the end result will not be satisfactory.

In addition to these problems there are other forms of blinds in which the head rails and bottom rails a formed of thermoplastic material. When cutting down of blind components such as these formed on thermoplastic it is found that it is generally unsuitable for cutting by means of a movable cutting die such as is used for cutting metal sections. Such thermoplastic section components are however easy to cut when using a rotary saw blades.

In this case it is found desirable to provide some form of component support to hold the component so that the saw cut is formed cleanly and in a desired plane.

For these reasons therefore the provision of a cutdown machine meeting all of these objectives, i.e. being capable of cutting through both the softer but thicker blind slats, and the harder but thinner metal head rail and bottom rail, in a single manual cutting movement, and being capable of saw cutting thicker materials, presents a complex problem.

The complexity of the design is further aggravated by the fact that (in the case of horizontal blinds) the head rail is located at the head of the blind and is usually made of metal, eg. steel, and the blind slats (of thicker material) are located spaced below the head rail. Consequently, when trimming the blind it is necessary to provide cutting dies for cutting head rails and for substantially simultaneously saw cutting the thicker blind slats. It will of course be appreciated that in the case of horizontal, i.e. Venetian blinds, all of these cuts must be made in a common plane, so as to provide a uniform end trimming function on the blind. Even for vertical blinds, the vertical blind slats must be trimmed, along their lower ends, by cutting all the slat ends along a common plane.

A further factor in this type of apparatus is that as far as possible it is desirable to simplify its operation for the service personnel in the retail outlet, so that the cutting or trimming of the ends of the blind may be carried out with the least possible chance for error. Preferably, in order to do this, the apparatus will be constructed in such a way that a single movement of a manual cutting arm or lever, will produce the cut down or trim function both in respect of the head rail cutting die and also the closure element saw blade, so that all the components of the blind are trimmed with a single manual stroke. When referring to a "manual" stroke it will be appreciated that, in fact, the apparatus could be power operated. In some cases the head rails may also be of softer material, such as thermoplastic, and in these cases saw blade cutting may be used to trim the ends of all the blind components.

It will further be appreciated that this type of equipment will be used by service personnel in retail establishments. As such, while they will have a certain degree of training, they will usually have numerous other duties, and may in fact be working somewhat under pressure, while a customer is actually waiting. Consequently, it is desirable as far as possible to make the apparatus as simple to operate as is possible.

For this reason, it is desirable that the operating mechanism, in this case for example, a manual lever, shall operate both the head rail cutting die and also the closure element cutting saw.

Consequently, it is desirable to provide some form of linkage in which both the die and the saw are operated.

It will also be appreciated that while reference is made to manual operation, it is conceivable that some form of power operated means could be provided, which would still require some degree of manual operation, if only to simply press a switch. Manual operation is deemed to be generic to all such forms of operation whether power assisted, or not.

### BRIEF SUMMARY OF THE INVENTION

With a view to providing a blind cutdown apparatus which addresses the various foregoing conflicting problems, the invention comprises a blind cut-down apparatus for cutting and sawing a blind having at least a head rail component of thin material, and blind slats of thicker material suspended from the head rail, and comprising a blind holding plate having opening means for at least a head rail component and slat components therein for receiving respective components of a blind there through, and holding them in position for cutting, a slat cutting saw moveable relative to said holding plate, for cutting blind slats extending through said holding plate.

Preferably in order to provide for cutting both thermoplastic components and/or metal components, the apparatus will also have a cutting die holder adjacent to said cutting saw, said cutting die holder carrying at least one cutting die for receiving said head rail there through, and being moveable relative to said holding plate for cutting said head rail, and including movement means for moving said cutting saw and said cutting die holder substantially simultaneously, whereby both said blind slats and said head rail may be cut substantially simultaneously and in a common plane along the surface of said holding plate.

Preferably the thermoplastic component holder will be moveable into and out of position, depending upon whether the blind has all thermoplastic components, or a mix of thermoplastic and of metal components.

The invention further provides for such a cut down apparatus and including a head rail cutting die secured to said holding plate, and said head rail cutting die being mounted to said die holder, whereby said head rail cutting die may move relative to said holding plate for cutting said head rail extending there through.

The invention further provides such an apparatus and further having a saw blade guide attached to said holding plate and said saw blade being moveable there along relative to said holding plate.

The invention further provides such an apparatus and in which manual movement means are provides for moving both said cutting die and said saw blade, with said cutting die moving a short distance, and said saw blade moving a greater distance and in a common plane, under the influence of a single manual operating means.

The invention further provides for a slat clamping mechanism operable to clamp a bundle of slats extending through said holding plate, whereby to hold them stationary during operation of said saw blade.

The invention further provides that the saw blade is operated by an electric motor, the saw blade comprising a rotatable saw disk.

The invention further provides that the cutting die guide shall provide a cutting die movement path which is diagonal to the movement path of said saw blade.

The invention further provides such an apparatus and including a vacuum fan and vacuum nozzle, located adjacent to said saw blade collecting saw cut debris resulting from the operation of said saw.

The invention further provides such an apparatus wherein the manual operation means comprises a rotary shaft, a manual lever connected to said shaft, an operating cam connected to said shaft and engaging said cutting die, and a movement transmission lever connected between said shaft and said saw blade, said transmission means are being operable through a path of movement greater than the path of movement of said cutting die.

In a simplified form of the invention, both the head rail, and the blind slats, and even the bottom rail, can all be cut by a single saw cutting blade, and they can all be held in a single clamp opening. This will become possible where, for example, the head rail and bottom rail are made out of a non-metallic material such that it is easily cut by means of a saw blade.

In this form of the invention a moveable head rail holder plate is provided, having head rail holding openings therein. The head rail holder plate is moveable between inoperable and operable positions, and in the operable position, the head rail openings register with the openings in the holder plate. In this way both the head rail and blind slats are held in position fixed and immovable, suitable for cutting by the cutting saw.

The invention further provides an embodiment in which a moveable component holder plate is formed with a plurality of component openings of varying shapes, for holding components of corresponding varying cross sections.

The various features of novelty which characterize the invention are pointed out with more particularity in the claims annexed to and forming a part of this disclosure. For a better understanding of the invention, its operating advantages and specific objects attained by its use, reference should be made to the accompanying drawings and descriptive matter in which there are illustrated and described preferred embodiments of the invention.

### IN THE DRAWINGS

Figure 1 is a perspective illustration of a rotary saw cut down machine from the saw blade side, illustrating the invention and showing blind components inserted therein;
Figure 2 is a perspective illustration of the apparatus of Figure 1 viewed from the opposite side;
Figure 3 is a section along the line 3-3 of Figure 1;
Figure 4 is a schematic side illustration of the head rail cut down die portion of the apparatus, shown in a first position;
Figure 5 is a view corresponding to Figure 1 showing the cut down die in a second position, and showing movement in phantom;
Figure 6 is a side elevational view of a further embodiment of the cutdown machine;
Figure 7 is a side elevation view of the apparatus of Figure 6;
Figure 8 is a perspective illustration of a simplified form of saw blade cut down machine where the saw blade will cut all of the blind components namely the head rail, the blind slats and the bottom rail, in a single pass of the saw blade;
Figure 9 is a perspective illustration of the apparatus of Figure 8, shown from the opposite side;
Figure 10 illustrates a side elevational view of a further embodiment to the invention showing an optional moveable head rail holder plate, the holder plate being in its inoperable position in Figure 10, and,
Figure 11 is a side elevation view corresponding to Fig 10, and showing the head rail holder plate moved into its operable position.

### DESCRIPTION OF A SPECIFIC EMBODIMENT

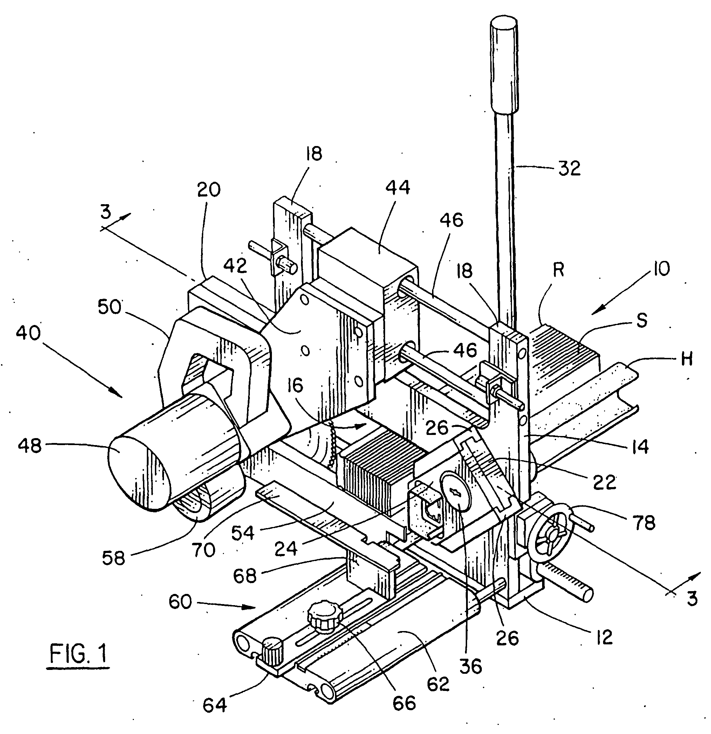

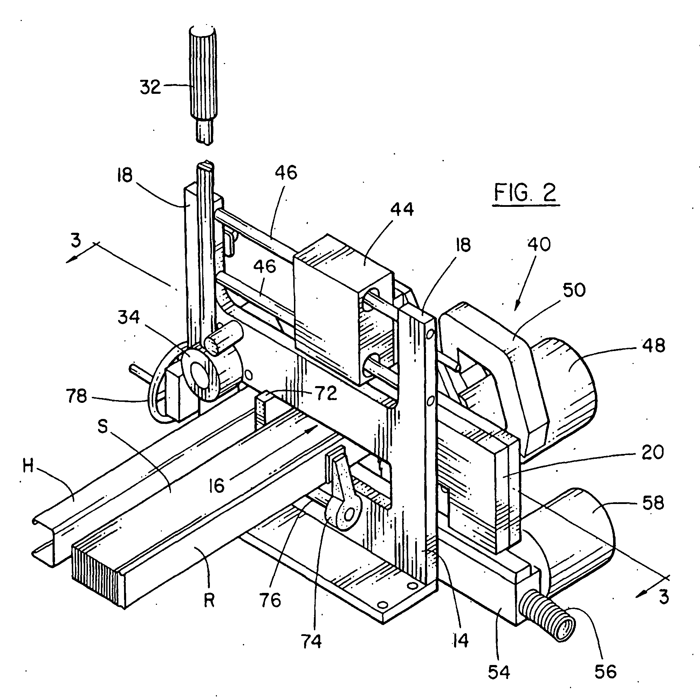

Referring first of all to Figs. 1 and 2, the invention is there illustrated in the form of a blind cut down machine indicated generally as 10. Such a machine is intended to be installed at a retail store, and would be bolted on a working surface somewhere in a service area away from the customers.

As explained above the purpose of the apparatus 10 is to be capable of trimming the head rail and slats both of horizontal or so called Venetian blinds, and also the head rail and slats of vertical blinds.

Where a Venetian blind has a bottom rail, then the apparatus is also capable is cutting down the bottom rail, if such a blind has a bottom rail.

It should also be understood that in the case of Venetian blinds, the Venetian blind is already assembled so that there are so called ladder tapes and also raise cords which are already attached to the slats, and connected to the head rail.

As a result, when trimming the ends of the blind head rail and slats, in Venetian blinds it will be understood that it is necessary to insert both the head rail (and bottom rail) and the slats into the trimming apparatus at the same time, so that the trim cuts are made in a common plane. It will be further understood that in the great majority of cases, when trimming a Venetian blind, it is necessary to trim the head rail (and bottom rail) and slats at both ends, so as to produce an even appearance in the finished cut down blind. If, for example, the blind must be cut down by, for example, a total of two inches, then the slats and the head rail (and bottom rail) at each end will have to be cut down by an amount of one inch, so as to produce a total two inch cut down.

On the other hand, with vertical blinds, the normal industry practice is to supply the head rail with its trolleys, and operating mechanism, and to supply a group of closure elements, ie. blind slats, in a package, with the slats separate from and detached from the head rail. In this case, the normal practice is to cut down the head rail at one end only, since the controls for the blind are usually located in a fixed location at the opposite end of the head rail.

The blind slats will usually be cut down only along their lower ends, since they are usually provided with some form of attachment means at their upper ends for connecting to the trolleys in the head rail when the blind is finally assembled and installed.

From this preliminary outline, it will be understood that the apparatus illustrated should preferably perform these varied functions on different types of blind products, so that a single cut down machine may be supplied to the retailer and the retail staff trained on that single machine, thereby avoiding the expense of supplying several different cut down machines and training staff on several machines.

Referring once again to the drawings, the apparatus 10 will be seen in this embodiment to comprise a base or mounting plate 12, and a frame plate 14 mounted thereon perpendicular thereto. The frame plate 14 is provided with a rectangular opening 16 for receiving blind components typically a head rail indicated as H, and closely spaced thereto, closure elements ie. blind slats S, and in this case, a blind bottom rail R. The blind illustrated, typically would be a Venetian blind, and it will be understood that the ladder tapes and raise cords are not illustrated simply for the sake of clarity, and to avoid complexity in the illustration. Frame plate 14 also defines two upwardly directed support arms 18-18, defining between them a generally U-shaped rectangular space, for reasons to be described below. Mounted on frame plate 14 there is a spacer plate 20, and holder plate 22.

In order to cut the head rail H which typically will be made of thin relatively hard material, typically metal, a moveable die mounting plate 24 is provided. The plate 22 and the moveable die plate 24 are mounted in a common pair of channels 26-26 - secured to frame plate 14. Holder plate 22 defines a rectangular slot like opening 28 of a shape that corresponds to the shape of the head rail H1 so as to hold it securely during cutting. In this particular embodiment, provision is made for two different shapes of head rails H1 and h1. For this purpose, a second head rail( h1) opening 29 is provided, which in this case, is located within the dimensions of the opening 28 for H1.

Moveable die plate 24 carries with it a cutting die 30 which has a corresponding rectangular slotted recess corresponding to the shape of the head rail H1 and opening 28. Moveable die plate 24 also carries a second cutting die 31, located within the dimensions of the cutting die 30, for cutting the smaller head rail placed through the smaller head rail opening 29.

Movement of the moveable die plate 24 relative to the fixed holder plate 22 will cause movement of the cutting die 30 (or 31) and this will sever or shear the material of the head rail. It will be appreciated that since the head rail is of relatively thin gauge material, the die plate 24 will not move a great distance. On the other hand, considerable force must be exerted on the die plate 24 in order for it to perform the shearing action. It will also be noted from Figs. 1 and 2 that the channels 26-26 which hold and control the moveable die plate 24, also define its path of movement relative to the head rail. This path of movement will be seen to be in a generally diagonal direction. The reason for this is that the shearing action of the cutting die 30 is preferably of a progressive nature, and will shear the head rail in a direction which is diagonal to its rectangular cross section from one corner to the other.

The moveable die plate 24 is moved by means of the manual lever 32. Lever 32 is coupled to a drive shaft 34. Shaft 34 extends through frame plate 14 and through fixed plate 22. Within fixed plate 22, there is mounted an offset drive stub shaft 36. By this means, by manual operation of lever 32, the shaft 34 can be rotated thereby rotating and causing an orbital movement of the drive stub shaft 36. This will cause sliding movement of the plate 24 relative to the fixed plate 22, thereby shearing the head rail.

The saw cutting assembly for cutting the closure elements (and bottom rail) is indicated generally as 40. It will be seen to comprise a saw blade mounting plate 42, which is secured to a slide block 44. Block 44 is mounted on slide rails 46-46 extending between the upright arms 18.

On the lower end of the saw plate 42, there is mounted a rotary saw assembly indicated as 48. The saw assembly 48 is essentially a typical electric motor, coupled by a shaft (not shown) to a rotary saw blade 49 of a type well known in the art. For simplicity, an operating handle 50 may be provided, on the saw assembly 48, for manually drawing the saw 48 to and fro along the rails 46. The spacer plate 20 is secured to the frame plate 14, so as to space the saw mounting plate 42 in the correct plane, so as to bring the saw blade into alignment with the interface between the fixed plate 22 and the moveable die plate 24. This is required so that the trimming cut down action both of the saw blade and of the moveable die plate 24, shall produce trimming of both the head rail and the blind slats, and the bottom rail where it is included in a common plane.

In order to ensure that the saw debris does not fly about, a hollow collection tube 54 is provided. Tube 54 is provided with a plurality of openings (not shown) along the length of the saw blade travel.

One end the hollow tube 54 may be connected, for example, by vacuum hose 56 (Fig. 2) to a vacuum pump and motor which are indicated generally as 58.

In order to preset the length of end trim or cut down on any particular job, the length cutting control indicated generally at 60 is provided. The length control 60 comprises a generally horizontal plate 62. A slidable bar 64 is moveably connected to plate 62 by means of threaded screw 66. A generally L-shaped spacer block 68 is secured to the end of bar 64. A blind contact plate 70 is attached to the block 68 and is oriented to a contact at the ends of the head rails H and the blind slat S and the bottom rail.

The spacer block 68 and blind contact plate 70 may, in some cases, be connected to the lever 32 and shaft 34 so that it moves away from the ends of the blind component but this is not always necessary and consequently, the mechanism is not described in detail.

In order to clamp the blind slats S and bottom rail R in position, to be held firmly during the operation of the saw blade, a clamp plate 72 is provided, secured to frame plate 14. A moveable clamp arm 74 is mounted on a screw shaft 76. A hand wheel 78 permits the screw shaft to be drawn to and fro, thereby drawing the clamp arm into contact with the blind slats and bottom rail (Fig. 2).

In operation, the head rail H and blind slats S and bottom rail R are inserted as shown in Figs. 1 and 2. The clamp arm 74 is operated so as to clamp the blind slats S and bottom rail R in position.

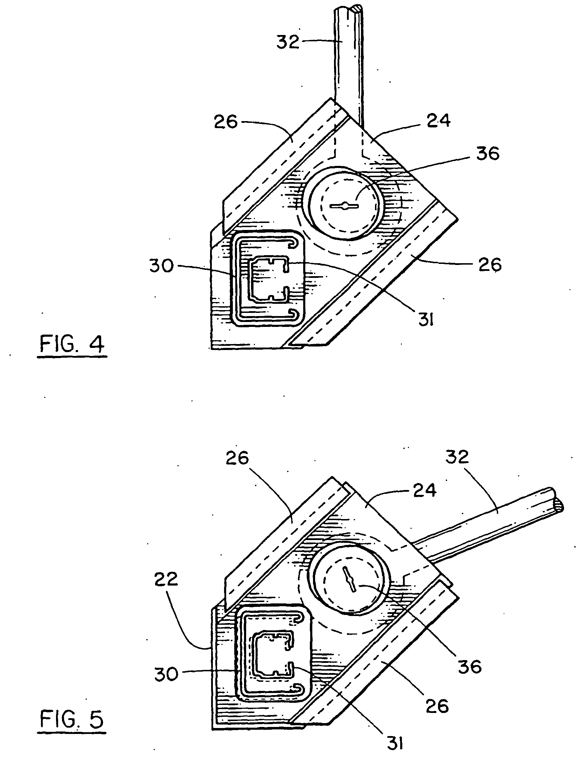

The lever 32 is then operated so as to move the moveable die plate 24 (Figs. 4 and 5) thereby severing the head rail.

Thereafter, the operator may simply manually grasp the handle 50 and switch on the motor 48, by any suitable electrical switch (not shown). The saw blade is then drawn through the blind slats and the bottom rail.

All of the blind components therefore are cut in a common plane while being held in position in the apparatus.

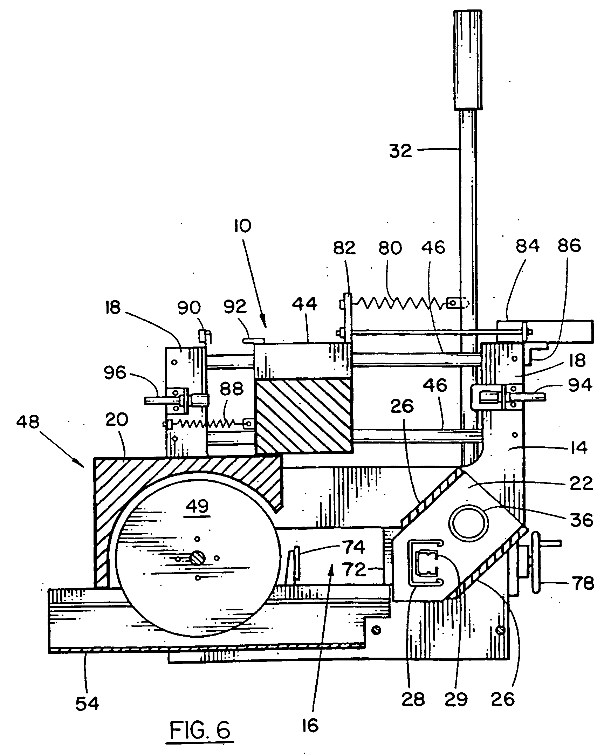

As shown in Figure 6, the operation of the operating means in this case, the lever 32, although other operating means could be used whether hand operated or power operated, for operating the die plate 24, and the operation of the saw assembly 48 and its sliding mount 44, may be coupled together. In order to provide this coupling, a first spring 80 may be provided. The spring 80 is connected between the lever 32 and a connecting bar 82 which is itself mounted on the slide block 44. Manual operation of the lever 32 will thus be communicated to the slide block 44 by the increased tension developed in spring 80.

In order to provide a slow progressive movement of the saw assembly, a damper means, namely a control cylinder 84 is provided. Cylinder 84 is mounted on a flange 86 on plate 18, and the piston rod of cylinder 84 is connected to bar 82.

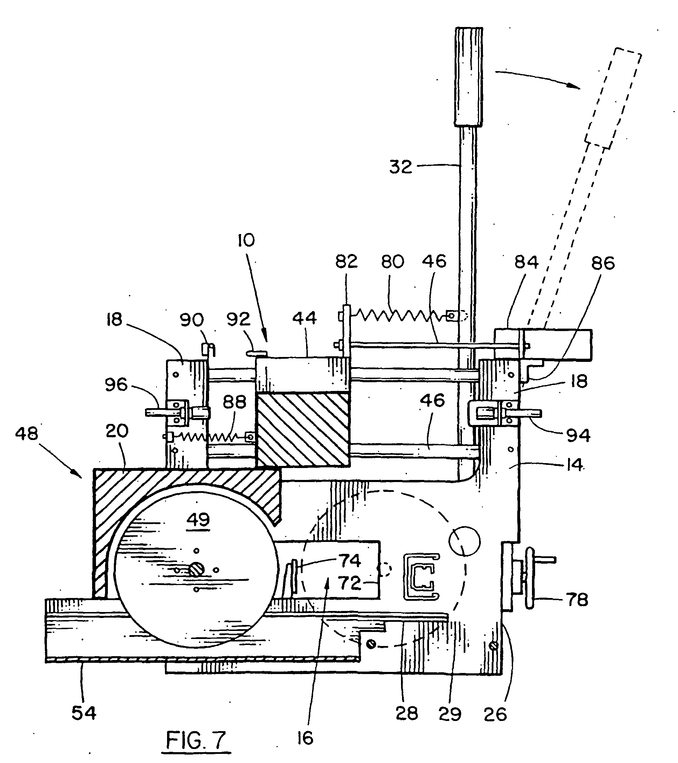

The operation of the cylinder 84 is such as to cause a progressive gradual movement of the saw blade assembly 48 (Fig. 7), in response to tensioning of the spring 80, thereby producing a slow, progressive, gradual movement of the saw blade assembly 48 so as to provide a smooth, regular cut through the ends of the blind closure elements and bottom rail.

In order to return the block 44, and the saw blade assembly 48, the return spring 88 is provided. Spring 88 connects between block 44 and frame 18.

In order to provide automatic on/off operation of the saw blade assembly 48, a typical limit switch 90 is provided, being operated by a finger 92 on block 44. As soon as the spring 80 is placed in tension, the finger 92 will release the limit switch 90 thereby activating the motor in the saw blade assembly 48.

Once the return spring 88 returns to the block 44, the finger 92 will contact the switch 90 and thereby shut off power to the motor and stop the saw blade assembly 48.

In addition, suitable end stops 94 and 96 may be provided on the two frame portions 18-18, so as to limit the length of travel of the block 44.

While the apparatus already described is suitable for use where, for example, the head rail is made of a metallic material, and the slats and bottom rail are made of a softer material suitable for cutting by means of a saw blade, it will be appreciated that in certain cases it may be possible to fabricate the head rail itself out of a softer material, so that it too may be cut by a saw blade.

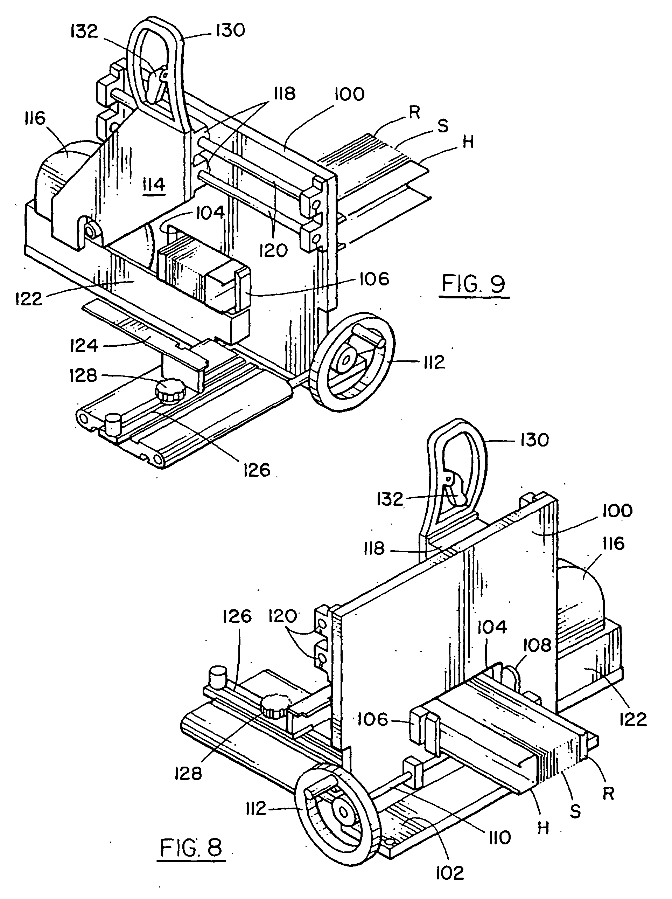

A modified simplified form of apparatus for this purpose is shown in Figures 8 and 9.

In this simplified apparatus, a frame plate 100, is mounted on a base plate 102. A blind component opening 104 is formed in plate 100. A component buffer 106 is mounted on plate 100.

A component clamp arm 108 is mounted on screw 110 operated by hand wheel 112.

Blind components consisting of a non-metallic head rail H, blind slats S, and a bottom rail R, are all passed through the opening 104. The edge of the head rail abuts against buffer 106, while the bottom plate is clamped by means of clamp 108, thereby securing the blind components in position for cutting.

A saw blade mounting 114, carries a rotary saw blade 116 driven by any suitable motor means (not shown). Arm 114 is secured to slide bearings 118. Bearings 118 are spaced apart from one another and ride on guide rods 120.

A collector channel 122 is secured to plate 100, and defines an opening along which blade 116 can travel. In this way, saw dust and debris from the saw blade cutting through the blind components, can fall down into the channel. The channel will be connected to a suitable vacuum source (not shown) in essentially the same manner as described above.

Blind component end stops are provided in the form of a transverse stop bar 124, mounted on a slide body 126, which is slidable to provide a fixed stop and which can be secured by means such as clamp screws 128.

The plate 114 is operated by means of a handle 130 and a trigger switch 132 is provided in handle 130, and when the trigger switch is depressed, the motor driving the blade 116 will commence operation.

In a still further embodiment to the invention, the advantages of both the cutting apparatus of Figure 1 and Figure 9 may be provided in a single apparatus.

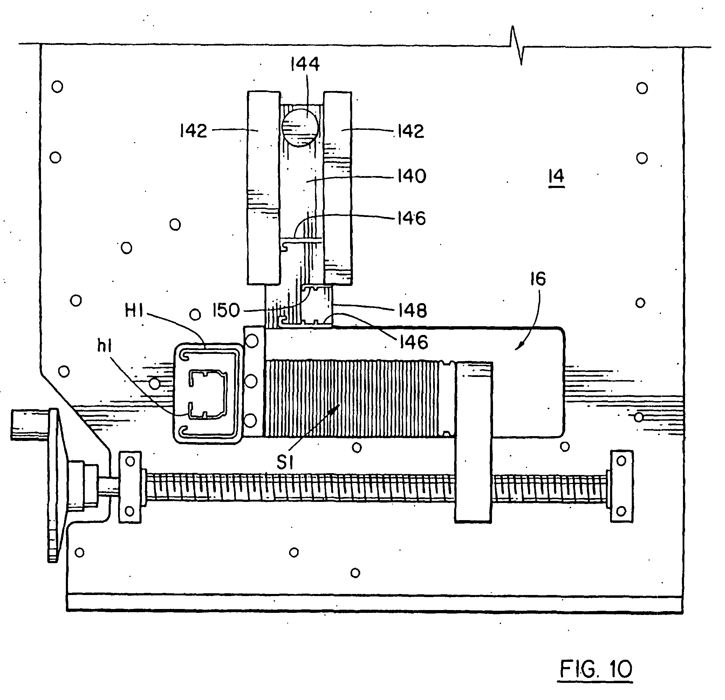

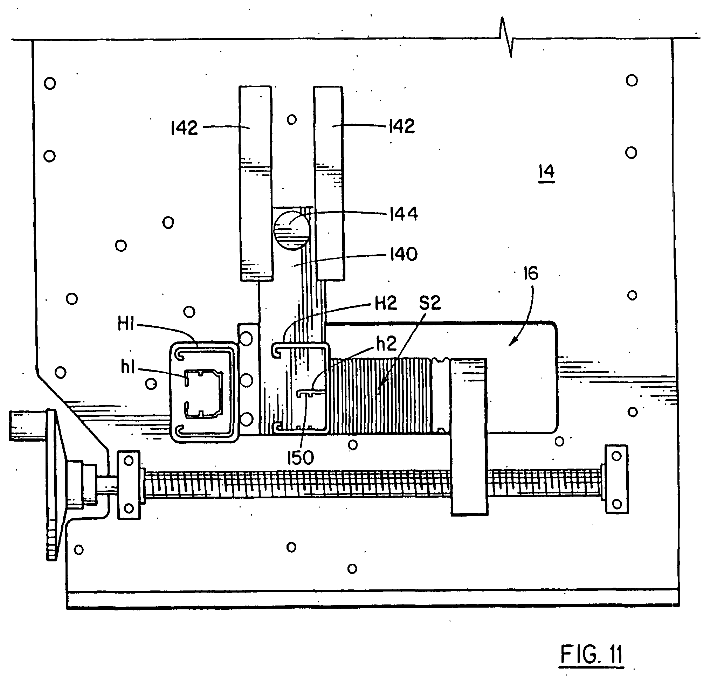

In the apparatus of Figures 10 and 11, the essential features of the apparatus of Figures 1 through 9 is provided, and is deemed included without reference.

In this embodiment, the apparatus is adaptable to either cut blinds in which the head rail is metallic and the slats are non-metallic, in which case the apparatus will employ the moveable cutter plate 24 and cutter die, for cutting the metallic head rail, or, the apparatus may be adapted for cutting a blind in which the head rail is made of softer materials typically thermoplastic, which does not require cutting in a head rail die, but which can be cut simply by means of the saw.

To facilitate this, the apparatus of Figures 10 and 11 provides a moveable head rail holder plate 140, mounted alongside the frame plate 14. Typically, the moveable holder plate 140 will be mounted above the opening 16. The holder plate 140 will be slidably mounted in slide channels 142. Any suitable form of plate locking device 144 is provided for holding the plate in, for example, its upper inoperative position.

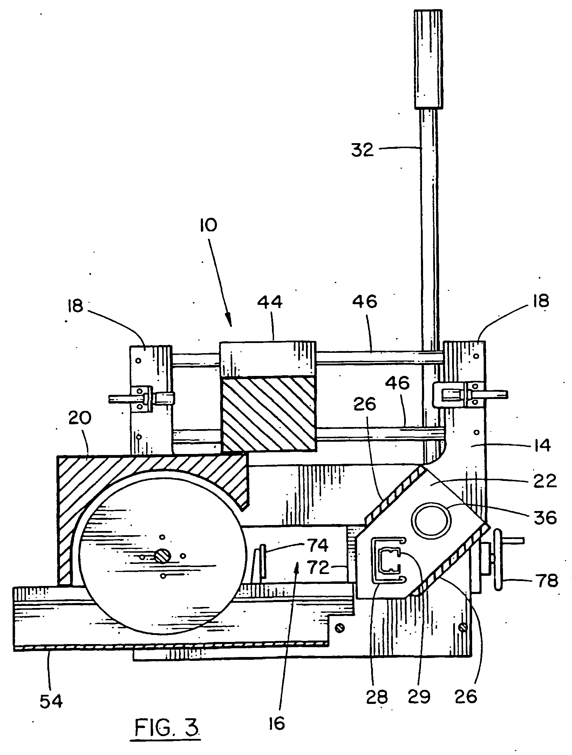

The head rail plate 140 is provided with the first pair of head rail holder slots 146 for a larger head rail H2, which are parallel and spaced apart from one another. They are oriented to support the two side walls of the typical three sided head rail channel, such as 28, 29 (Fig. 3).

Between the two slots 146-146 a head rail support shoulder 148 is provided, for supporting the web or intermediate walls of the typical head rail channel.

A further head rail slot 150 is provided located between slots 146-146. The head rail slot 150, coupled with the lower slot 146, will allow such a smaller rectangular head rail h2 to be supported by the head rail plate 140.

Head rail slot 150 can receive a small head rail typical in so-called "Mini-blinds" having smaller slats.

When the head rail support plate 140 is in its upper inoperative position, the apparatus will typically be used for cutting a blind cutting slats indicated as S1, which will be cut by the saw, and a head rail indicated as H1 which will be cut by the head rail cutting die already described.

Typically, however, when the support plate 140 is in its lower operative position as shown in Figure 11, the apparatus will be used for cutting slats indicated as S2, and a head rail indicated as H2.

In each case, the cutting of smaller blinds having narrower slats and a smaller head rail is not illustrated, but is deemed to be self-explanatory.

The embodiment shown in Figs 10 and 11, is capable of handling blinds consisting of all thermoplastic components, on the one hand, and a mix of thermoplastic components and metal components on the other.

As mentioned above the existence of some blinds using all thermoplastic components makes it desirable to provide such a machine which is adaptable to cutting down either type of blind. Where the head rail and bottom rail components are formed of thermoplastic then the using of metal cutting dies is found to be unsuitable. Instead it is found to be preferable to use the rotary cutting saw to cut all the components when they are all of thermoplastic..

In this case as explained the holder plate 22 and cutting die plate 24 are not used.

After positioning the moveable plate 140 in its operative position, and inserting the blind components, and operating the clamp, the rotary saw is then switched on. As it is drawn past plate 14 it will cut the slats and then the head rail H2.

Clearly, if desired a similar moveable plate (not shown) could be provided with an opening for holding a bottom rail while cutting. Such a bottom rail plate would of course be located somewhere along the length of the opening 14. However in most cases this will not be needed. Blinds of this type are often made without a bottom rail, or , if one is provided, it is simply formed of solid plastic but somewhat thicker than the slats, and can therefore be held by the clamp for cutting.

The foregoing is a description of a preferred embodiment of the invention which is given here by way of example only. The invention is not to be taken as limited to any of the specific features as described, but comprehends all such variations thereof as come within the scope of the appended claims.

## Claims

1. A blind cut-down apparatus (10) for cutting a head rail (H) by means of a head rail cutting die (30, 31) and for sawing blind slat components (S) suspended from the head rail (H) by means of a slat cutting saw (40), the blind cut-down apparatus (10) comprising:
a blind frame plate (14) having an opening (16) for receiving respective components of a blind therethrough and supports (20, 22) for holding them in position for cutting;
a clamp device (72, 74) for clamping the blind slat components (S) in the opening (16) in position relative to the blind frame plate (14);
**characterised by**:
guides (40, 44) for guiding a slat cutting saw (40) to move relative to the frame plate (14), for cutting blind slat components (S) extending through the opening (16) and clamped by the clamp device (72, 74);
guides (26) for guiding the head rail cutting die (30, 31) for cutting the head rail (H); and
a movement drive (32, 34) for moving the slat cutting saw (40) and moving the head rail cutting die (30, 31).

2. A blind cut-down apparatus (10) as claimed in Claim 1, wherein the movement drive (32, 34) is arranged to move the cutting saw (40) and the head rail cutting die (30, 31) substantially simultaneously whereby both the blind slat components (S) and the head rail (H) are cut substantially simultaneously.

3. A blind cut-down apparatus (10) as claimed in Claim 1 or Claim 2 including a head rail holding plate (22) and a head rail die plate (24) for mounting the head rail cutting die (30, 31), the head rail die plate (24) being movably secured to the head rail holding plate (22) by guides (26), whereby the head rail die plate (24) and cutting die (30, 31) can move relative to the head rail holding plate (22) for cutting a head rail (H) extending therethrough.

4. A blind cut-down apparatus (10) as claimed in any of Claims 1 to 3 further including a pair of parallel saw blade guide rods (46) attached to the frame plate (14) and a guide body (40) carrying the cutting saw (40) and being movable along the guide rods (46) relative to the frame plate (14).

5. A blind cut-down apparatus (10) as claimed in Claim 3 or Claim 4 when dependent thereon, in which a single manual operating member (32, 34) is provided for moving the head rail die plate (24), the cutting die (30, 31) and the cutting saw (40), with the cutting die (30, 31) being movable a short distance and the cutting saw (40) being movable a greater distance than the cutting die (30, 31) and in a common plane therewith, under the influence of the single manual operating member (32, 34).

6. A blind cut-down apparatus (10) as claimed in any preceding claim, wherein the cutting saw (40) includes a saw blade (49) operable by an electric motor (48) and comprising a rotatable saw disc.

7. A blind cut-down apparatus (10) as claimed in Claim 6, wherein the manual operating member (32, 34) is moveable so as to move the head rail die plate (24) to cut the head rail (H) and the cutting saw (40) is provided with an operating handle (50) to enable the cutting saw (40) to be manually moved whereby the saw blade (49) is drawn through the blind slat components (S).

8. A blind-cut down apparatus (10) as claimed in Claim 6 or Claim 7, wherein the cutting die guides (26) provide a cutting die movement path which is diagonal to the movement path of the saw blade (49).

9. A blind-cut down apparatus (10) as claimed in any preceding claim including a vacuum fan (58) and vacuum nozzle (56) located adjacent the saw blade (49) for collecting saw cut debris resulting from the operation of the cutting saw (40).

10. A blind cut-down apparatus (10) as claimed in Claim 5 or any of Claims 6 to 9 when dependent upon Claim 5, wherein the manual operating member (32, 34) comprises a rotary shaft (34), a manual lever (32) connected to the shaft (34), an operating cam (36) connected to the shaft (34) and engaging the cutting die holder (24), and a movement transmission (80, 82) connected between the shaft (34) and the saw blade (49), the saw blade (49) being operable through a path of movement greater than the path of movement of the cutting die (30, 31).

11. A blind cut-down apparatus (10) as claimed in any preceding claim including a head rail support member (140) movable between operative and inoperative positions.

12. A blind cut-down apparatus (10) as claimed in Claim 11, wherein the head rail support member (140) defines head rail openings (146) therein and is movable to register with the opening (16) in the frame plate (14).

13. A blind cut-down apparatus (10) as claimed in Claim 12 including slide channels (142) movably mounting the head rail support member (140) on the frame plate (14), the head rail holder support member (140) being movable between operative and inoperative positions and, when in the operative position, the head rail opening (146) registers with the opening (16) in the blind frame plate (14).

14. A blind cut-down apparatus (10) as claimed in Claim 11, 12 or 13 including a first head rail opening (146) in the head rail support member (140) for receiving a first head rail (H2) therein, and a second head rail opening (150) in the head rail support member (140) for receiving a second head rail (h2) therein.

15. A blind cut-down apparatus (10) as claimed in Claim 14, wherein the first and second head rail openings (146, 150) comprise a pair of parallel spaced apart slots (146) and an intermediate slot (150) for receiving a corresponding head rail (H2, h2) therethrough, with a support shoulder (148) extending between the slots (146, 150) for supporting a head rail component thereon.

16. A blind cut down apparatus (10) as claimed in Claim 10 or any of Claims 11 to 15 when dependent upon Claim 10, wherein a resilient member (80) connects the manual lever (32) to the saw cutting assembly (40), for movement in one direction, and to a resilient return spring (88) for returning the saw cutting assembly (40) in the opposite direction.

17. A blind cut-down apparatus (10) as claimed in Claim 16 including a damping device (84) arranged to control movement of the saw cutting assembly (40) in one direction, and including an electric switch (90, 92) at each end of the cutter path of the saw cutting assembly (40) for controlling operation of the saw blade (49).

18. A blind cut-down apparatus (10) as claimed in any preceding claim, wherein, for a blind further including a bottom rail (R) suspended from blind slats (S), the clamp (74, 72) includes a movable member (74) adapted, in use, to abut the bottom rail (R) and urge the bottom rail (R) toward the blind slats (S).

19. A blind cut-down apparatus (10) as claimed in Claim 3 or any of Claims 4 to 18 when dependent upon Claim 3, wherein the head rail holding plate (22) defines a first head rail opening (28), for receiving a head rail (H1) of a first blind having a first head rail dimension, and further defines a second head rail opening (29) for receiving a head rail (h1) of a second blind having a second head rail dimension smaller than the first head rail dimension.

20. A method of operating a blind cut-down apparatus (10) as claimed in any of the preceding claims **characterised by** the steps of:
positioning the head rail (H) in the opening (16);
positioning the blind slat components (S) in the opening (16), spaced from the head rail (H);
holding the head rail (H) in a holder (22, 140);
clamping the blind slat components (S) in the opening (16) by the clamp (72, 74);
moving a cutting saw (49, 116) relative to the blind slat opening (16) along a saw blade guide (44) attached to the frame plate (14), thereby cutting the blind slat components (S), and moving a head rail die (30, 31) relative to the head rail holder (22, 140), thereby cutting the head rail component (H).

21. A method according to Claim 20, wherein the blind further comprises a bottom rail (R) suspended from the blind slats (S), including the steps of clamping the bottom rail (R) in the opening (16) together with the blind slats (S) and moving the cutting saw (40, 116) during the cutting step through the bottom rail (R) in addition to the blind slats (S).

22. A method according to Claim 20 or 21, in which the clamping step comprises moving a movable clamp member (74) of the adjustable clamp (72, 74) against the bottom rail (R), in order to move the bottom rail (R) toward the blind slats (S), to clamp them as a single bundle in the opening (16).

## Patentansprüche

1. Vorrichtung zum Zurückschneiden von Jalousien (10) zum Schneiden einer Kopfschiene (H) mittels einer Kopfschienen-Schneidmatrize (30, 31) und zum Sägen von von der Kopfschiene (H) herabhängenden Jalousie-Lamellenelementen (S), mittels einer Lamellen-Schneidesäge (40), wobei die Vorrichtung zum Zurückschneiden von Jalousien (10) aufweist:
eine Jalousien-Rahmenplatte (14) mit einer Öffnung (16) zum Aufnehmen entsprechender Elemente einer Jalousie durch diese hindurch und Trägern (20, 22), um sie in einer Schneideposition zu halten;
eine Klemmvorrichtung (72, 74) zum Festklemmen der Jalousie-Lamellenelemente (S) in der Öffnung (16) in einer Position bezüglich der Jalousie-Rahmenplatte (14);
**gekennzeichnet durch**:
Führungen (40, 44) zum Führen einer Lamellen-Schneidesäge (40) für eine Bewegung bezüglich der Rahmenplatte (14), zum Schneiden von Jalousie-Lamellenelementen (S), die sich **durch** die Öffnung (16) erstrecken und **durch** die Klemmvorrichtung (72, 74) festgeklemmt sind;
Führungen (26) zum Führen der Kopfschienen-Schneidmatrize (30, 31) zum Schneiden der Kopfschiene (H); und
einen Antriebsmechanismus (32, 34) zum Bewegen der Lamellen-Schneidesäge (40) und Bewegen der Kopfschienen-Schneidmatrize (30, 31).

2. Vorrichtung zum Zurückschneiden von Jalousien (10) nach Anspruch 1, wobei der Antriebsmechanismus (32, 34) angeordnet ist, um die Schneidesäge (40) und die Kopfschienen-Schneidmatrize (30, 31) im Wesentlichen gleichzeitig zu bewegen, wodurch sowohl die Jalousie-Lamellenelemente (S) und die Kopfschiene (H) im Wesentlichen gleichzeitig geschnitten werden.

3. Vorrichtung zum Zurückschneiden von Jalousien (10) nach Anspruch 1 oder 2, die eine Kopfschienen-Halteplatte (22) und eine Kopfschienen-Matrizenplatte (24) zum Montieren der Kopfschienen-Schneidmatrize (30, 31) umfasst, wobei die Kopfschienen-Matrizenplatte (24) beweglich an der Kopfschienen-Halteplatte (22) durch Führungen (26) befestigt ist, wodurch sich die Kopfschienen-Matrizenplatte (24) und die Schneidmatrize (30, 31) bezüglich der Kopfschienen-Halteplatte (22) zum Schneiden einer sich durch sie hindurch erstreckenden Kopfschiene (H) bewegen können.

4. Vorrichtung zum Zurückschneiden von Jalousien (10) nach Anspruch 1 bis 3, die weiterhin ein Paar an der Rahmenplatte (14) angebrachter paralleler Sägeblatt-Führungsstäbe (46) und einen Führungskörper (40) umfasst, der die Schneidesäge (40) trägt und bezüglich der Rahmenplatte (14) entlang der Führungsstäbe (46) beweglich ist.

5. Vorrichtung zum Zurückschneiden von Jalousien (10) nach Anspruch 3 bis 4, bei Abhängigkeit davon, bei dem ein Einhandbedienelement (32, 34) bereitgestellt wird, zum Bewegen der Kopfschienen-Matrizenplatte (24), der Schneidmatrize (30, 31) und der Schneidesäge (40), wobei die Schneidmatrize (30, 31) über eine kurze Strecke beweglich ist und die Schneidesäge (40) über eine größere Strecke als die Schneidmatrize (30, 31) beweglich und in einer gemeinsamen Ebene mit dieser ist, unter dem Einfluss des Einhandbedienelements (32, 34).

6. Vorrichtung zum Zurückschneiden von Jalousien (10) nach einem der vorherigen Ansprüche, wobei die Schneidesäge (40) ein Sägeblatt (49) umfasst, das über einen Elektromotor (48) bedienbar ist und eine Kreissägenscheibe aufweist.

7. Vorrichtung zum Zurückschneiden von Jalousien (10) nach Anspruch 6, wobei das Handbedienelement (32, 34) beweglich ist, um die Kopfschienen-Matrizenplatte (24) so zu bewegen, dass die Kopfschiene (H) geschnitten wird und die Schneidesäge (40) mit einem Bediengriff (50) versehen ist, um die Schneidesäge (40) in die Lage zu versetzen, von Hand bewegt zu werden, wobei das Sägeblatt (49) durch die Jalousie-Lamellenelemente (S) gezogen wird.

8. Vorrichtung zum Zurückschneiden von Jalousien (10) nach Anspruch 6 oder 7, wobei die Schneidmatrizenführungen (26) einen Schneidmatrizen-Bewegungspfad vorsehen, der diagonal zum Bewegungspfad des Sägeblatts (49) verläuft.

9. Vorrichtung zum Zurückschneiden von Jalousien (10) nach einem der vorherigen Ansprüche, der einen Vakuumlüfter (58) und eine Vakuumdüse (56) umfasst, die an das Sägeblatt (49) angrenzen, zum Sammeln von Schneidabfall, der vom Betrieb der Schneidesäge (40) herrührt.

10. Vorrichtung zum Zurückschneiden von Jalousien (10) nach Anspruch 5 oder einem der Ansprüche 6 bis 9 bei Abhängigkeit von Anspruch 5, wobei das Handbedienelement (32, 34) eine Drehachse (34), einen mit der Achse (34) verbundenen Handhebel (32), eine mit der Achse (34) verbundene und in den Schneidmatrizenhalter (24) eingreifende Antriebsnocke (36) und eine mit der Achse (34) und dem Sägeblatt (49) verbundene Bewegungsübertragung (80, 82) aufweist, wobei das Sägeblatt (49) durch einen Bewegungspfad hindurch betreibbar ist, der größer ist als der Bewegungspfad der Schneidmatrize (30, 31).

11. Vorrichtung zum Zurückschneiden von Jalousien (10) nach einem der vorherigen Ansprüche, der ein Kopfschienen-Tragelement (140) umfasst, das zwischen operativen und inoperativen Positionen beweglich ist.

12. Vorrichtung zum Zurückschneiden von Jalousien (10) nach Anspruch 11, wobei das Kopfschienen-Tragelement (140) Kopfschienen-Öffnungen (146) darin definiert und beweglich ist, um mit der Öffnung (16) in der Rahmenplatte (14) einzurasten.

13. Vorrichtung zum Zurückschneiden von Jalousien (10) nach Anspruch 12, der Gleitkanäle (142) umfasst, die das Kopfschienen-Tragelement (140) auf der Rahmenplatte (14) beweglich festhalten, wobei das Kopfschienen-Halter-Tragelement (140) zwischen operativen und inoperativen Positionen beweglich ist und bei Einnahme der operativen Position die Kopfschienen-Öffnung (146) mit der Öffnung (16) in der Jalousie-Rahmenplatte (14) einrastet.

14. Vorrichtung zum Zurückschneiden von Jalousien (10) nach Anspruch 11, 12 oder 13, die eine erste Kopfschienen-Öffnung (146) in dem Kopfschienen-Tragelement (140) zur Aufnahme einer ersten Kopfschiene (H2) darin und eine zweite Kopfschienen-Öffnung (150) in dem Kopfschienen-Tragelement (140) zur Aufnahme einer zweiten Kopfschiene (h2) darin umfasst.

15. Vorrichtung zum Zurückschneiden von Jalousien (10) nach Anspruch 14, wobei die ersten und zweiten Kopfschienen-Öffnungen (146, 150) ein Paar parallel beabstandeter Schlitze (146) und einen dazwischen liegenden Schlitz (150) zur Aufnahme einer entsprechenden Kopfschiene (H2, h2) durch diese hindurch aufweisen, wobei sich eine Tragschulter (148) zwischen den Schlitzen (146, 150) zum Tragen eines Kopfschienen-Elements darauf erstreckt.

16. Vorrichtung zum Zurückschneiden von Jalousien (10) nach Anspruch 10 oder einem der Ansprüche 11 bis 15 bei Abhängigkeit von Anspruch 10, wobei ein elastisches Element (80) den Handhebel (32) mit der Sägen-Anordnung (40) zur Bewegung in eine Richtung, und mit einer elastischen Rückholfeder (88) verbindet, um die Sägen-Anordnung (40) wieder in die entgegengesetzte Richtung zu lenken.

17. Vorrichtung zum Zurückschneiden von Jalousien (10) nach Anspruch 16, die eine Dämpfungseinrichtung (84) umfasst, die zur Steuerung der Bewegung der Sägen-Anordnung (40) in eine Richtung angeordnet ist und einen elektrischen Schalter (90, 92) an jedem Ende des Schneidepfades der Schnittsägen-Anordnung (40) zum Steuern des Betriebes des Sägeblatts (49) umfasst.

18. Vorrichtung zum Zurückschneiden von Jalousien (10) nach einem der vorherigen Ansprüche, wobei bei einer Jalousie, die weiterhin eine Bodenschiene (R) umfasst, die von den Jalousie-Lamellen (S) herabhängt, die Klemme (74, 72) ein bewegliches Element (74) einschließt, das bei Gebrauch so angepasst ist, dass es an der Bodenschiene (R) anliegt und die Bodenschiene (R) in Richtung der Jalousie-Lamellen (S) zwingt.

19. Vorrichtung zum Zurückschneiden von Jalousien (10) nach Anspruch 3 oder einem der Ansprüche 4 bis 18 bei Abhängigkeit von Anspruch 3, wobei die Kopfschienen-Halteplatte (22) eine erste Kopfschienen-Öffnung (28) definiert zum Aufnehmen einer Kopfschiene (H1) einer ersten Jalousie, die eine Erstreckung einer ersten Kopfschiene aufweist, und weiterhin eine zweite Kopfschienen-Öffnung (29) definiert zum Aufnehmen einer Kopfschiene (h1) einer zweiten Jalousie, die eine Erstreckung einer zweiten Kopfschiene aufweist, die kleiner ist als die Erstreckung der ersten Kopfschiene.

20. Verfahren zum Betreiben einer Vorrichtung zum Zurückschneiden von Jalousien (10) nach einem der vorherigen Ansprüche, **gekennzeichnet durch** folgende Schritte:
Positionieren der Kopfschiene (H) in der Öffnung (16);
Positionieren der Jalousie-Lamellenelemente (S) in der Öffnung (16), die von der Kopfschiene (H) beabstandet ist;
Halten der Kopfschiene (H) in einem Halter (22, 140);
Festklemmen der Jalousie-Lamellenelemente (S) in der Öffnung (16) **durch** die Klemme (72, 74);
Bewegen einer Schneidesäge (49, 116) bezüglich der Öffnung (16) der Jalousielamelle entlang einer Sägeblattführung (44), die an der Rahmenplatte (14) angebracht ist, wodurch die Jalouise-Lamellenelemente (S) geschnitten werden, und Bewegen einer Kopfschienen-Matrize (30, 31) bezüglich des Kopfschienen-Halters (22, 140), wodurch das Kopfschienen-Element (H) geschnitten wird.

21. Verfahren nach Anspruch 20, wobei die Jalousie weiterhin eine Bodenschiene (R), die von den Jalousie-Lamellen (S) herabhängt, aufweist, einschließlich der Schritte des Einklemmens der Bodenschiene (R) in die Öffnung (16) gemeinsam mit den Jalousie-Lamellen (S) und Bewegen der Schneidesäge (40, 116) während des Schneideschritts durch die Bodenschiene (R) zusätzlich zu den Jalousie-Lamellen (S).

22. Verfahren nach Anspruch 20 oder 21, wobei der Schritt des Einklemmens aufweist das Bewegen eines beweglichen Klemmelements (74) der justierbaren Klemme (72, 74) gegen die Bodenschiene (R), um die Bodenschiene (R) in Richtung der Jalousie-Lamellen (S) zu bewegen, um sie als ein Einzelbündel in die Öffnung (16) einzuklemmen.

## Revendications

1. Appareil de découpe de jalousie (10) pour couper un rail de tête (H) au moyen d'un outil de découpe (30, 31) de rail de tête et pour scier des composants de lattes de jalousie (S) suspendus au rail de tête (H) au moyen d'une scie de découpe de lattes (40), l'appareil de découpe de jalousie (10) comprenant :
une plaque de cadre (14) de jalousie ayant une ouverture (16) pour recevoir à travers elle des composants respectifs d'une jalousie et des supports (20, 22) pour les maintenir en position pour la découpe ;
un dispositif de serrage (72, 74) pour serrer les composants de lattes de jalousie (S) dans l'ouverture (16) en position par rapport à la plaque de cadre (14) de jalousie ;
**caractérisé par** :
des guides (40, 44) pour guider une scie de découpe de lattes (40) pour son déplacement par rapport à la plaque de cadre (14), pour couper les composants de lattes de jalousie (S) s'étendant à travers l'ouverture (16) et serrés par le dispositif de serrage (72, 74) ;
des guides (26) pour guider l'outil de découpe (30, 31) de rail de tête pour découper le rail de tête (H) ; et
un entraînement de déplacement (32, 34) pour déplacer la scie de découpe de lattes (40) et déplacer l'outil de découpe (30, 31) de rail de tête.

2. Appareil de découpe de jalousie (10) selon la revendication 1, où l'entraînement de déplacement (32, 34) est agencé pour déplacer la scie de découpe (40) et l'outil de découpe (30, 31) de rail de tête essentiellement simultanément, les composants de lattes de jalousie (S) et le rail de tête (H) étant découpés essentiellement simultanément.

3. Appareil de découpe de jalousie (10) selon la revendication 1 ou la revendication 2, comprenant une plaque de retenue (22) de rail de tête et une plaque d'outil (24) de rail de tête pour monter l'outil de découpe (30, 31) de rail de tête, la plaque d'outil (24) de rail de tête étant fixée de façon mobile à la plaque de retenue (22) de rail de tête par des guides (26), la plaque d'outil (24) de rail de tête et l'outil de découpe (30, 31) pouvant se déplacer par rapport à la plaque de retenue (22) de rail de tête pour couper un rail de tête (H) la traversant.

4. Appareil de découpe de jalousie (10) selon l'une quelconque des revendications 1 à 3, comprenant également une paires de tiges de guidage (46) de lame de scie parallèles attachées à la plaque de cadre (14) et un corps de guidage (40) portant la scie de découpe (40) et étant mobile le long des tiges de guidage (46) par rapport à la plaque de cadre (14).

5. Appareil de découpe de jalousie (10) selon la revendication 3 ou la revendication 4 quand elle en dépend, dans lequel un élément opérationnel manuel (32, 34) unique est prévu pour déplacer la plaque d'outil (24) de rail de tête, l'outil de découpe (30, 31) et le corps de guidage (40), l'outil de découpe (30, 31) étant mobile sur une courte distance et la scie de découpe (40) étant mobile sur une plus grande distance que l'outil de découpe (30, 31) et dans un plan commun avec lui, sous l'influence de l'élément opérationnel manuel (32, 34) unique.

6. Appareil de découpe de jalousie (10) selon l'une quelconque des revendications précédentes où la scie de découpe (40) comprend une lame de scie (49) pouvant être actionnée par un moteur électrique (48) et comprenant un disque de scie rotatif.

7. Appareil de découpe de jalousie (10) selon la revendication 6, où l'élément opérationnel manuel (32, 34) est mobile de façon à déplacer la plaque d'outil (24) de rail de tête pour couper le rail de tête (H) et où la scie de découpe (40) est munie d'une poignée de manoeuvre (50) pour permettre à la scie de découpe (40) d'être déplacée manuellement, la lame de scie (49) étant tirée à travers les composants de lattes de jalousie (S).

8. Appareil de découpe de jalousie (10) selon la revendication 6 ou la revendication 7, où les guides (26) d'outil de découpe fournissent un chemin de déplacement d'outil de découpe qui est diagonal par rapport au chemin de déplacement de la lame de scie (49).

9. Appareil de découpe de jalousie (10) selon l'une quelconque des revendications précédentes, comprenant un ventilateur aspirant (58) et une buse aspirante (56) situés de façon adjacente à la lame de scie (49) pour récupérer les débris de découpe de la scie résultant du fonctionnement de la scie de découpe (40).

10. Appareil de découpe de jalousie (10) selon la revendication 5 ou selon l'une quelconque des revendications 6 à 9 quand elle dépend de la revendication 5, où l'élément opérationnel manuel (32, 34) comprend un arbre rotatif (34), un levier manuel (32) raccordé à l'arbre (34), une came de commande (36) raccordée à l'arbre (34) et mettant en prise l'élément de retenue d'outil de découpe (24), et une transmission de mouvement (80, 82) raccordée entre l'arbre (34) et la lame de scie (49), la lame de scie (49) pouvant être actionnée via un chemin de déplacement plus grand que le chemin de déplacement de l'outil de découpe (30, 31).

11. Appareil de découpe de jalousie (10) selon l'une quelconque des revendications précédentes, comprenant un élément de support de rail de tête (140) mobile entre des positions actives et inactives.

12. Appareil de découpe de jalousie (10) selon la revendication 11, où l'élément de support de rail de tête (140) y définit des ouvertures de rail de tête (146) et est mobile pour coïncider avec l'ouverture (16) dans la plaque de cadre (14).

13. Appareil de découpe de jalousie (10) selon la revendication 12, comprenant des canaux de coulissement (142) montant de façon mobile l'élément de support de rail de tête (140) sur la plaque de cadre (14), l'élément de support de retenue de rail de tête (140) étant mobile entre des positions actives et inactives et, quand il est dans la position active, l'ouverture de rail de tête (146) coïncide avec l'ouverture (16) dans la plaque de cadre (14) de jalousie.

14. Appareil de découpe de jalousie (10) selon la revendication 11, 12 ou 13, comprenant une première ouverture de rail de tête (146) dans l'élément de support de rail de tête (140) pour y recevoir un premier rail de tête (H2), et une deuxième ouverture de rail de tête (150) dans l'élément de support de rail de tête (140) pour y recevoir un deuxième rail de tête (h2).

15. Appareil de découpe de jalousie (10) selon la revendication 14, où les première et deuxième ouvertures de rail de tête (146, 150) comprennent une paire de rainures (146) parallèles espacées et une rainure intermédiaire (150) pour recevoir à travers elle un rail de tête (H2, h2) correspondant, avec un épaulement de support (148) s'étendant à travers les rainures (146, 150) pour y supporter un composant de rail de tête.

16. Appareil de découpe de jalousie (10) selon la revendication 10 ou selon l'une quelconque des revendications 11 à 15 quand elle dépend de la revendication 10, où un élément élastique (80) raccorde le levier manuel (32) à l'ensemble de découpe par scie (40), pour un déplacement dans une direction, et à un ressort de rappel élastique (88) pour ramener l'ensemble de découpe par scie (40) dans la direction opposée.

17. Appareil de découpe de jalousie (10) selon la revendication 10, comprenant un dispositif amortisseur (84) agencé pour commander le mouvement de l'ensemble de découpe par scie (40) dans une direction, et comprenant un interrupteur électrique (90, 92) à chaque extrémité du chemin de lame de l'ensemble de découpe par scie (40) pour commander le fonctionnement de la lame de scie (49).

18. Appareil de découpe de jalousie (10) selon l'une quelconque des revendications précédentes, où, pour une jalousie comprenant également un rail de fond (R) suspendu à des lattes de jalousie (S), le dispositif de serrage (74, 72) comprend un élément mobile (74) adapté, pendant l'utilisation, pour buter contre le rail de fond (R) et pousser le rail de fond (R) vers les composants de lattes de jalousie (S).

19. Appareil de découpe de jalousie (10) selon la revendication 3 ou selon l'une quelconque des revendications 4 à 18 quand elle dépend de la revendication 3, où la plaque de retenue (22) de rail de tête définit une première ouverture (28) de rail de tête pour recevoir un rail de tête (H1) d'une première jalousie ayant une première dimension de rail de tête, et définit également une deuxième ouverture (29) de rail de tête pour recevoir un rail de tête (h1) d'une deuxième jalousie ayant une deuxième dimension de rail de tête plus petite que la première dimension de rail de tête.

20. Procédé d'actionnement d'un appareil de découpe de jalousie (10) selon l'une quelconque des revendications précédentes, **caractérisé par** les étapes consistant à :
positionner le rail de tête (H) dans l'ouverture (16) ;
positionner les composants de lattes de jalousie (S) dans l'ouverture (16), espacés par rapport au rail de tête (H) ;
retenir le rail de tête (H) dans un élément de retenue (22, 140) ;
serrer les composants de lattes de jalousie (S) dans l'ouverture (16) avec le dispositif de serrage (72, 74) ;
déplacer une scie de découpe (49, 116) par rapport à l'ouverture (16) de lattes de jalousie le long d'un guide de lame de scie (44) attaché à la plaque de cadre (14), découpant ainsi les composants de lattes de jalousie (S), et déplacer un outil de découpe (30, 31) de rail de tête par rapport à l'élément de retenue (22, 140), découpant ainsi le composant de rail de tête (H).

21. Procédé selon la revendication 20, où la jalousie comprend également un rail de fond (R) suspendu aux lattes de jalousie (S), comprenant les étapes consistant à serrer le rail de fond (R) dans l'ouverture (16) solidairement avec les lattes de jalousie (S) et à déplacer la scie de découpe (40, 116) pendant l'étape de découpe à travers le rail de fond (R) en plus des lattes de jalousie (S).

22. Procédé selon la revendication 20 ou 21, dans lequel l'étape de serrage consiste à déplacer un élément de serrage mobile (74) du dispositif de serrage (72, 74) réglable contre le rail de fond (R) afin de déplacer le rail de fond (R) vers les lattes de jalousie (S), pour les serrer en tant que faisceau unique dans l'ouverture (16).
